(19) Europäisches Patentamt

European Patent Office

Office européen des brevets

(11) Veröffentlichungsnummer: **0 218 803 B1**

(12) **EUROPÄISCHE PATENTSCHRIFT**

(45) Veröffentlichungstag der Patentschrift: **29.04.92**

(21) Anmeldenummer: **86109350.8**

(22) Anmeldetag: **09.07.86**

(51) Int. Cl.⁵: **H01H  9/02**, H05K 7/14, H02B 1/04

(54) **Elektrische Haushaltsgeräte.**

(30) Priorität: **13.07.85 DE 8520273 U**
**17.07.85 DE 8520619 U**

(43) Veröffentlichungstag der Anmeldung:
**22.04.87 Patentblatt  87/17**

(45) Bekanntmachung des Hinweises auf die
Patenterteilung:
**29.04.92 Patentblatt  92/18**

(84) Benannte Vertragsstaaten:
**DE FR GB IT SE**

(56) Entgegenhaltungen:
**DD-A- 94 662        DE-A- 3 007 242
DE-B- 1 909 358      DE-B- 2 426 381
DE-B- 2 532 549      US-A- 2 882 644
US-A- 2 949 695**

(73) Patentinhaber: **Blomberg-Werke KG
Voltastrasse 50
W-4730 Ahlen(DE)**

(72) Erfinder: **Günther, Rainer
Mistweg 8
W-4700 Hamm 5(DE)**

(74) Vertreter: **Weber, Joachim, Dr. et al
Hoefer, Schmitz, Weber, Patentanwälte
Ludwig-Ganghofer-Strasse 20
W-8022 Grünwald/München(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(−/2.17/2.0)

**Beschreibung**

Die Erfindung betrifft ein elektrisch arbeitendes Gerät, wie als Waschmaschine, Geschirrspülmaschine o. dgl. ausgebildetes Haushaltsgerät, mit einer Regeleinrichtung wie einem Temperaturregler oder einem einen Schalter enthaltenden Programmwerk, die jeweils mit einer Stirnplatte an einer festen Gerätewand anliegend befestigt sind, die mit Ausnehmungen ausgestattet ist, in die verformbare, an der Stirnplatte befestigte hinterfassende Laschen, Nasen einfassen. Dabei hat die Stirnplatte eine etwa rechtwinklig abstehende Einstecklasche, die in eine Aufnahmeöffnung der Gerätewand gesteckt ist.

Aus DE-B-1 909 358 ist eine ähnliche Befestigungsvorrichtung für einen Drucktastenschalter bekannt, bei der eine Gehäusewand und ein Abdeckrahmen mittels einer durch eine Ausnehmung fassenden Befestigungsnasen miteinander verbunden sind.

Eine derartige Befestigung bietet keine ausreichende Lagefixierung.

Bei anderen bekannten derartigen Geräten wird die Regeleinrichtung (Temperaturregler, Programmwerk) mit einer eine Schaltwelle aufweisenden Stirnwand in Richtung der Gerätewand bewegt,bis die Schaltwelle durch eine Bohrung der Gerätewand hindurchgesteckt und die Stirnplatte an der Gerätewand angelegt ist. Nun läßt sich die Stirnplatte mit Hilfe von mehreren Befestigungsschrauben an der Gerätewand befestigen, wobei die Regeleinrichtung mit einer Hand gehalten und eine Schraube nach der anderen mit der anderen Hand durch Bohrungen der Gerätewand hindurchgesteckt und in mit den Bohrungen fluchtende Gewindebohrungen der Stirnplatte eingeschraubt wird.

Diese Vorgehensweise ist arbeitsaufwendig, weil die richtige Lage der Regeleinrichtungen an der Gerätewand, in welcher die Bohrungen der Gerätewand und die Gewindebohrungen der Stirnplatte fluchten, erst gesucht werden muß. Bei schweren Regeleinrichtungen kann sich dabei deren Lage leicht wieder ändern, weil die gewichtige Regeleinrichtung mit der Hand gehalten wird. Nachteilig ist es auch, daß die Gewindebohrungen in der Stirnplatte und evtl. Bohrungen in der Gerätewand vorher angebracht werden müssen.

Der Erfindung liegt die Aufgabe zugrunde, ein Gerät der vorgenannten Gattung zu schaffen, das eine einfache und schnelle Befestigung der Regeleinrichtung an der Gerätewand bei schraubenloser Montage ermöglicht. Auf diese Weise soll der Arbeitsaufwand fur die Montage verringert werden. Außerdem sollen die Vorarbeiten, um die Montage durchführen zu können, verringert werden.

Diese Aufgabe wird erfindungsgemäß bei einem Haushaltsgerät der angegebenen Gattung dadurch gelöst, daß an der Stirnplatte zusätzlich in einem Abstand von der Einstecklasche eine abstehende Kopflasche angeordnet ist, wobei der Kopf der Kopflasche durch eine Schlitzausnehmung der Gerätewand hindurchgesteckt und bei der Verformung der Kopflasche um seine rechtwinklig zur Stirnplatte verlaufende Achse verdreht ist und wobei an der Stirnplatte in einem Abstand von der Kopflasche eine etwa rechtwinklig abstehende Hakenlasche angeordnet ist, die durch eine Winkelausnehmung der Gerätewand hindurchgesteckt ist.

Die Stirnplatte ist somit an der Gerätewand festgelegt, wobei zwei Befestigungsstellen ihre Lage fixieren, nämlich die Einstecklaxche, die in die Aufnahmeöffnung einfaßt und die Kopflasche, die in die Schlitzausnehmung eingreift, wobei der an der anderen Seite herausragende Kopf der Kopflasche aus der Ebene der Kopflasche und der Schlitzausnehmung durch Verdrahen herausbewegt ist. Diese Verformung der Kopflasche kann mit Hilfe einer Zange durchgeführt werden, mit der der herausragende Kopf ergriffen und dann verdreht werden kann. Die überstehenden Enden des Kopfes der Kopflasche liegen dann an der von dem Temperaturregler abgewandten Seite der Gerätewand an und verhindern eine Entfernung den Temperaturreglers von der Gerätewand. Bereits in dieser Lage ist eine Verdrehung des Temperaturreglers an der Gerätewand nicht mehr möglich, weil die Stirnplatte zwei im Abstand voneinander angeordnete Befestigungsstellen an der Gerätewand hat.

Durch die Hakenlasche ergibt sich eine noch bessere Befestigung der Stirnplatte und damit des Temperaturreglers an der Gerätewand, weil nun eine dritte Befestigungsstelle vorhanden ist und der Schlitz der durch die Winkelausnehmung der Gerätewand hindurchgeführten Hakenlasche die Gerätewand an beiden Seiten im Bereich der Winkelausnehmung umgibt. Es ist also nun völlig unmöglich, den auf diese Weise an der Gerätewand befestigten Temperaturregler von dort zurückzubewegen.

Soweit es bereits ebenfalls duch DD-A-94 662 bekannt ist, mittels ansich bekannter Kopflaschen eine Schiene und eine Platte miteinander zu verbinden, so soll damit eine gegeneinander verschiebbare Halterung gegeben sein. Nach Aufgabenstellung und Wirkung ist eine derartige Verbindung nicht mit dem Gegenstand der vorliegenden Erfindung zu vergleichen. Dasselbe gilt für die Offenbarung aus DE-B 24 26 381.

Bei einer abgeänderten weiteren Ausführungsform kann die Stirnplatte eines Programmwerks eine Ausnehmung aufweisen und mittels einer in der Gerätewand befestigten Haltenase hintergriffen sein, die durch die Ausnehmung hindurchverläuft.

Infolge dieser Haltenase, die aus der Ebene der festen Gerätewand zur Seite des Programmwerks hin herausragt, läßt sich das Programm-werk in einfacher Weise in der Gerätewand einhängen. Zu diesem Zweck braucht das Programmwerk nur so bewegt zu werden, daß die Haltenase durch die Ausnehmung der Stirnplatte hindurchgelangt. Ein Verrutschen des Programmwerks an der Gerätewand wird dadurch zumindest sehr erschwert, wenn nicht überhaupt verhindert. Es können nun in einfacher Weise weitere Maßnahmen zur Befestigung durchgeführt werden.

Bevorzugt dient zur Befestigung der Stirnplatte des Programmwerks an der Gerätewand außer der Haltenase ein durch eine erste ßohrung, der Gerätewand hindurchverlaufender Montagezapfen des Programmwerks, auf welchem eine Federscheibe mit Klemmzungen aufgesteckt sein kann. Nach dem Einhängen des Programmwerks an der Haltenase braucht dieses nun nur noch so bewegt zu werden, daß der Montagezapfen durch die erste Bohrung bindurchgelangt, wonach auf das herausragende Ende die Federscheibe auf den Montagezapfen aufgesteckt wird. Die abatehenden Klemmzungen der Federscheibe stützen sich mit ihren freien Enden an dem Mantel des Montagezapfens ab, so daß ein Zurückbewegen der Federscheibe an dem Montagezapfen verhindert wird.

Sofern kein Montagezapfen an dem Programm-werk vorgesehen ist, kann bevorzugt zur Befestigung der Stirnplatte des Programmwerks an der Gerätewand außer der Haltenase eine durch eine zweite Bohrung der Gerätewand hindurchverlaufende und in eine Gewindebohrung der Stirnplatte singeschraubte Befestigungsschraube dienen. In diesem Fall ist also nur noch eine einzige Befestigungsschraube zweckmäßig, während bei der bekannten Ausführung mindestens zwei Schrauben mit Bohrungen und Gewindebohrungen benötigt wurden.

Weitere Ausführungsformen der Erfindung ergeben sich aus den Patentansprüchen.

Ausführungsbeispiele der Erfindung sind in der Zeichnung dargestellt und im folgenden näher beschrieben. Es zeigen:

Fig.1    eine perspektivische explosionsartige Darstellung eines Temperaturreglers und des Verbindungsbereichs einer Gerätewand für die Anbringung dieses Temperaturreglers;

Fig.2    eine Ansicht der Außenseite der Gerä-tewand im Verbindungsbereich, nach-dem an der Innenseite der Temperaturregler herangeführt und eingehängt worden, jedoch bevor der Kopf der Kopflasche um seine Achse verdreht worden ist;

Fig.3    die Ansicht gemäß Fig.2 nach dem Verdrehen des Kopfes der Kopflasche;

Fig.4    eine abgeänderte Ausführungsform mit einem an einer waagerechten Gerätewand befestigten Programmwerk mit senkrechter Schaltwelle;

Fig.5    einen senkrechten Schnitt durch die Gerätewand und die Stirnplatte des Programmwerks gemäß Fig.4 im Bereich der Befestigungseinrichtungen;

Fig.6    einen senkrechten Schnitt gemäß Fig.5 jedoch in gegenüber Fig.5 abgeänderter Form der Befestigung der Stirnplatte an der Gerätewand.

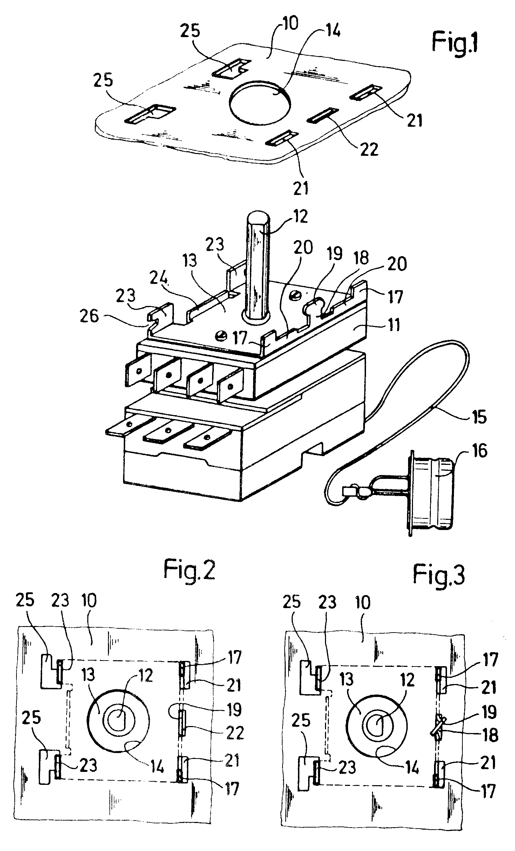

Ein Haushaltsgerät (Fig.1 bis 3) weist eine waagerechte feste Gerätewand 10 auf, an deren Unterseite ein Temperaturregler 11 mit einer senkrechten Schaltwelle 12 so befestigt ist, daß eine waagerechte Stirnplatte 13 an der Unterseite der Gerätewand 10 in einem geringen Abstand fest anliegt, wobei die von dieser Stirnplatte 13 rechtwinklig aufregende Schaltwelle 12 durch eine Bohrung 14 der Gerätewand 10 hindurchragt.

Für die einfache und schnell durchführbare Befestigung des Temperaturreglers 11 an der Gerätewand 10 sind in der Gerätewand mehrere Ausnehmungen angeordnet, in die bzw. durch die hindurch Befestigungsteile der Stirnplatte 13 des Temperaturreglers 11 ragen. Der Temperaturregler 11 ist über ein Kapillarrohr 15 mit einem Temperaturfühler 16 verbunden. Die Stirnplatte 13 ist als rechtek-kiges Blechteil ausgebildet und weist an zwei parallelen Rechteckseiten mehrere Laschen auf. Deren Lage entspricht die Lage der Ausnehmungen der Gerätewand 10.

Im einzelnen ist an einer Rechteckseite der Stirnplatte 13 an den beiden Enden jeweils eine Einstecklasche 17 angeordnet, die rechtwinklig von der Stirnplatte 13 aufragt. In der Mitte zwischen den beiden Einstecklaschen 17 steht eine Kopflasche 18 vor, deren oberes Ende als Kopf 19 ausgebildet ist. Zwischen der Kopflasche 18 und jeder Einstecklasche 17 ragt von der Stirnplatte 13 ebenfalls rechtwinklig eine Distanzlasche 20 auf, deren obere Oberfläche für die Anlage an der Gerätewand 10 vorgesehen ist, während die Einstecklaschen 17 in Aufnahmeöffnungen 21 der Gerätewand 10 und die Kopflasche 18 in eine Schlitzausnehmung 22 der Gerätewand 10 hineinragen, wobei der Kopf 19 der Kopflasche 18 durch die Schlitzausnehmung 22 hindurchgeführt ist und an der Oberseite der Gerätewand 10 herausragt.

In entsprechender Weise sind an der zu dieser Rechteckseite der Stirnplatte 13 parallelen Rechteckseite an den Enden zwei Hakenlaschen 23 von der Stirnplatte 13 rechtwinklig aufragend angeordnet. Zwischen den Hakenlaschen 23 erstreckt sich parallel zu dieser Rechteckseite, jedoch etwas nach innen an der Stirnplatte 13 versetzt eine weitere Distanzlasche 24, deren obere Oberfläche für die Anlage der Unterseite der Gerätewand 10 bestimmt ist. Diese Distanzlasche 24 bestimmt mit den beiden Distanzlaschen 20 der anderen Rechteckseite den genauen geringfügigen Abstand des Tempersturreglers 11 bzw. der Stirnplatte 13 von der Unterseite der Gerätewand 10. Bei der Anlage der Distanzlasche 24 an der Unterseite der Gerätewand 10 fassen die Hakenlaschen 23 durch Winkelausnehmungen 25 der Gerätewand 10 hindurch.

Die Herstellung sowohl der Gerätewand 10 als auch der Stirnplatte 13 kann in einfacher Weise durch Stanzen erfolgen. Bei der Gerätewand 10 werden alle Ausnehmungen ausgestanzt, während die Stirnplatte 13 als Rechteckplatte zunächst an den beiden parallelen Rechteckseiten mit den, Formen der später zu bildenden Einstecklaschen 17, Kopflaschen 18, Distanzlaschen 20 und Hakenlaschen 23 ausgestanzt wird. Danach lassen sich diese Laschen in einfacher Weise zur Oberseite der Stirnseite 13 hin rechtwinklig abbiegen. Für die Seite mit der Kopflasche ist nur eine Biegung erforderlich, weil die Kopflasche 18, die Distanzlaschen 20 und die Einstecklaschen 17 in einer Reihe hintereinander mit einem Blechstreifen einstückig ausgebildet sind.

Für die Befestigung der Hakenlaschen 23 an der Gerätewand 10 weist jede Hakenlasche 23 einen an einer Seite offenen Schlitz 26 auf. Die Befestigung des Temperaturreglers 11 an der Gerätewand 10 erfolgt nun so, daß der Temperaturregler 11 von unten an die waagerechte Gerätewand 10 herangeführt wird, bis die Schaltwelle 12 durch die Bohrung 14 und die Einstecklaschen 17, die Kopflaschen 18 und die Hakenlaschen 23 in bzw. durch die entsprechenden Öffnungen der Gerätewand 10 gesteckt sind, also in die Aufnahmeöffnungen 21, durch die Schlitzausnehmung 22 und durch die Winkelausnehmungen 25. Diese Bewegung ist beendet, wenn die Distanzlaschen 20 und 24 an der Unterseite der Gerätewand 10 anliegen. Bei dieser Bewegung müssen zunächst die Hakenlaschen 23 durch die langen Bereiche der Winkelausnehmungen 25 hindurchgeführt werden, wobei der Temperaturregler 11 aus seiner senkrechten Richtung eringfügig ausgeschwenkt ist, so daß die Schaltwelle 12 mit der Senkrechten einen spitzen Winkel bildet. In dieser Lage kann der Kopf 19 der Kopflasche 18 an der Unterseite der Gerätewand 10 neben seiner Schlitzausnehmung 22 anliegen. Nun wird der Temperaturregler 11 unterhalb der Gerätewand 10 so verschoben, daß die Hakenlaschen 23 der Stirnplatte 13 in die kurzen Bereiche der Winkelausnehmungen 25 der Gerätewand 10 gelangen, wobei die von den Winkeln der Winkelausnehmungen 25 umgebenen Teile der Gerätewand 10 in die Schlitze 26 der Hakenlasche 23 hineingeraten. Die Hakenlaschen 23 liegen also infolge ihrer Schlitze 26 beidseitig an der Gerätewand 10 an. Infolge dieser Verschiebung können nun auch die Kopflasche 18 und die Einstecklaschen 17 in ihre Ausnehmungen 22 bzs. 21 hineinfassen, wozu der Temperaturregler 11 verschwenkt wird, so daß seine Schaltwelle 12 eine senkrechte Lage einnimmt. Dieser Zustand ist in Fig.2 der Zeichnung dargestellt. Die Distanzlaschen 20 liegen nun ebenfalls an der Unterseite der Gerätewand 10 an.

Die Besfestigung dieser Lage des Temperaturreglers 11 an der Gerätewand 10 erfolgt nun in einfacher Weise dadurch, daß der an der Oberseite der Gerätewand 10 aus der Schlitzausnehmung 22 herausragende Kopf 19 der Kopflasche 18 mit einer Zange ergriffen und um eine senkrechte Achse verdreht wird, wobei sich eine Verbiegung der Kopflasche 18 ergibt. Es entfallen somit bei dieser Befestigungsart jegliche Verschraubungen. Fig.3 zeigt die Gerätewand 10 im Befestigungsbereich, nachdem die Verdrehung des Kopfes 19 durchgeführt wurde.

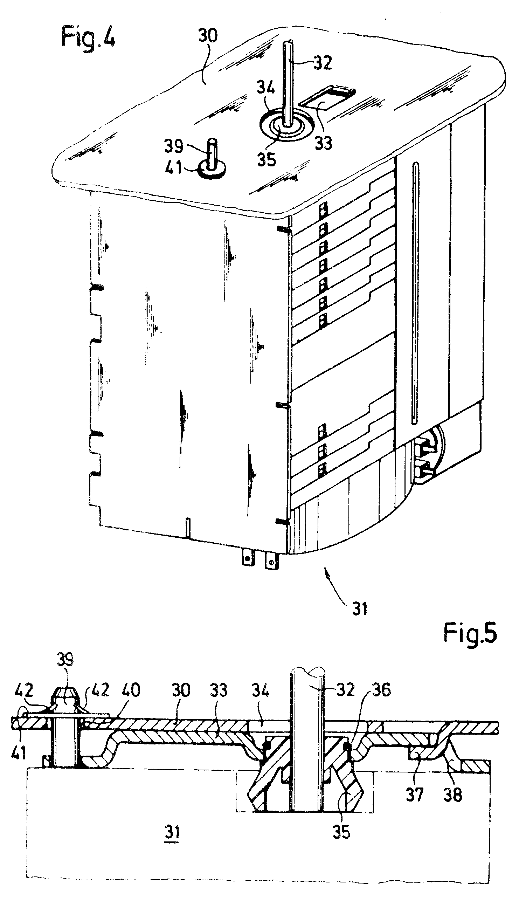

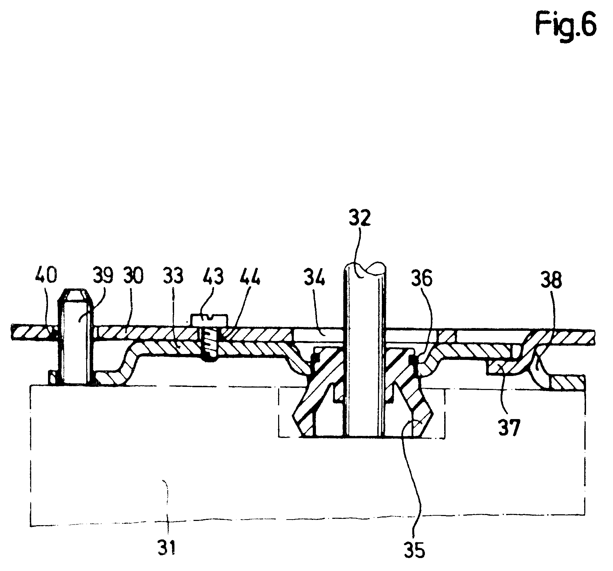

Bei einer abgeänderten Ausführungsform der Erfindung ist gemäß Fig.4 und 5 eine waagerechte feste Gerätewand 30 vorgesehen, an deren Unterseite ein Programmwerk 31 mit einer senkrechten Schaltwelle 32 so befestigt ist, daß eine waagerechte Stirnplatte 33 an der Unterseite der Gerätewand 30 fest anliegt, wobei die von dieser Stirnplatte 33 rechtwinklig aufragende Schaltwelle 32 durch eine Bohrung 34 der Gerätewand hindurchragt.

Für die Befestigung sind gemäß Fig.5 der Zeichnung zu beiden Seiten der Bohrung 34 Befestigungseinrichtungen an der Gerätewand 30 vorgesehen. Auf der rechten Seite der Schaltwelle 32, die über eine Lagerhülse 35 mit einem Befestigungaring 36 an der Stirnplatte 33 gelagert ist, ist in einem Abstand von der Bohrung 34 eine Haltenase 37 an der Gerätewand 30 angeordnet, die aus der blechförmigen Gerätewand ausgestanzt und aus deren Ebene herausgebogen ist. Diese Haltenase 37 hintergreift die Stirnplatte 33, wobei sie durch eine Ausnehmung 38 der Stirnplatte 33 hindurchverläuft und mit ihrer Oberfläche an der von der Gerätewand 30 abgewandten Oberfläche der Stirnplatte 33 anliegt. Die Abmessungen der Hältenase 37 sind so gewählt, daß bei an der Gerätewand anliegender Stirnplatte 33 des Programmwerks 31 die Stirnplatte 33 an ihrer anderen Seite an der Haltenase 37 abgestützt ist.

In einem radielen Abstand von der Schaltwelle 32 ist auf deren von der Haltenase 37 abgewandter Seite ein paralleler Montagezapfen 39 vorgeschen, der beim Einhängen des Programmwerks 31 an der Haltenase 37 der Gerätewand 30 und beim Durchstecken der Schaltwelle 32 durch die Bohrung 34 durch eine in der Gerätewand 30 passend angeordnete Bohrung 40 hindurchverläuft, so daß sein freies Ende an der Seite der von der Stirnplatte 33 abgewandten Oberfläche der Gerätewand 30 vorsteht. Da der Montagezapfen 39 in der Bohrung 40 gehalten wird, ist eine Verschiebung der Stirnplatte 33 in Richtung der Ebene dar Gerätewand 30 nicht mehr möglich.

Zur schnellen und einfachen Befestigung des Montagazapfens 39 in der Bohrung 40 wird auf das freie Ende des Montagezapfens 39 eine Federscheibe 41 aufgesteckt, deren Klemmzungen 42 sich an der äußeren Oberfläche des Montagezapfens 39 in einem federnd ausgelenkten Zustand abstützen. Ein Zurückbewegen der Federscheibe 41, also ein Abnehmen von dem Montagezapfen 39, wird durch die Klemmzungen 42 verhindert.

Das Ausführungsbeispiel gemäß Fig.6 der Zeichnung unterscheidet sich von dem Beispiel gemäß Fig.4 und 5 nur dadurch, daß die zweite Befestigungseinrichtung von einer Befestigungsschraube 43 gebildet ist, die durch eine Bohrung 44 der Gerätewand 30 hindurchgesteckt und in eine mit dieser Bohrung 44 fluchtende Gewindebohrung der Stirnplatte 33 eingeschraubt ist. Die Haltenase 37 ragt durch die rechts von der Schaltwelle 32 angeordnete Ausnehmung 38 dar Stirnplatte 33 hindurch und hintergreift die Stirnplatte, während die Schaltwelle 32 durch die bohrung 34 und der dazu parallele Montagezapfen 39 durch die Bohrung 40 der Gerätewand 30 hindurchverläuft. Diese Ausführung, bei der die Stirnplatte 33 des Programmwerks 31 mit Hilfe der Haltenase 37 rechts von der Schaltwelle 32 und mit Hilfe der Befestigungsschraube 43 links von der Schaltwelle 32 an der Gerätewand 30 befestigt ist, ermöglicht es auch, Programmwerke zu verwenden, die keine besonderen Montagezapfen aufweisen.

Bei einem weiteren Ausführungsbeispiel (nicht dargestellt) nimmt die Gerätewand 30 eine senkrechte Stellung und das Programmwerk 31 mit seiner senkrechten Stirnplatte 33 eine waagerechte Stellung seiner Schaltwelle 32 ein.

**Patentansprüche**

1. Elektrisch arbeitendes Gerät, wie als Waschmaschine, Geschirrspüler o. dgl. ausgebildetes Haushaltsgerät, mit einer Regeleinrichtung wie einem Temperaturregler oder einem einen Schalter enthaltenden Programmwerk, wobei die jeweils mit einer Stirnplatte (13) an einer festen Regeleinrichtung oder das Programmwerk Gerätewand (10, 30) anliegend befestigt sind, wobei die Gerätewand (10, 30) mit Ausnehmungen (21, 22, 38) ausgestattet ist, in die verformbare, an der Stirnplatte (13, 33) befestigte hinterfassende Laschen (17, 18,) 23 einfassen, der art, daß an der Stirnplatte (13) die etwa rechtwinklig abstehende Einstecklasche (17) angeordnet ist, die in eine Aufnahmeöffnung (21) der Gerätewand (10) gesteckt ist, dadurch gekennzeichnet, daß an der Stirnplatte zusätzlich in einem Abstand von der Einstecklasche (17) die abstehende Kopflasche (18) angeordnet ist, wobei der Kopf der Kopflasche durch eine Schlitzausnehmung (22) der Gerätewand (10) hindurchgesteckt und bei der Verformung der Kopflasche (18) um seine rechtwinklig zur Stirnplatte (13) verlaufende Achse verdreht ist und wobei an der Stirnplatte (13) in einem Abstand von der Kopflasche (18) die etwa rechtwinklig abstehende Hakenlasche (23) angeordnet ist, die durch eine Winkelausnehmung (25) der Gerätewand (10) hindurchgesteckt ist.

2. Gerät nach Anspruch 1, dadurch gekennzeichnet, daß die Hakenlasche (23) mit einem ihre Hakenform bildenden, an einem Ende offenen Schlitz (26) die Gerätewand (10) im Bereich der Winkelausnehmung (25) beidseitig umfaßt.

3. Gerät nach den Ansprüchen 1 oder 2, dadurch gekennzeichnet, daß an der Stirnplatte (13) insgesamt zwei Einstecklaschen (17) und/oder insgesamt zwei Hakenlaschen (23) ausgebildet sind.

4. Gerät nach einem der Ansprüche 1 bis 3, dadurch gekennzeichnet, daß an der Stirnplatte (13) mehrere etwa rechtwinklig abstehende Distanzlaschen (20, 24) in einem Abstand voneinander angeordnet sind, an welchen die Gerätewand (10) abgestützt ist.

5. Gerät nach Anspruch 4, dadurch gekennzeichnet, daß die Stirnplatte (13) eine Rechteckform aufweist, wobei die Kopflasche (18), die Einstecklaschen (17), Hakenlaschen (23) und die Distanzlaschen (20, 24) an zwei parallelen Rechteckseiten angeordnet sind, und daß an einer Rechteckseite der Stirnplatte (13) an den Enden die Einstecklaschen (17) angeordnet sind, wobei sich zwischen diesen die Kopflasche (18) befindet.

6. Gerät nach Anspruch 4 oder 5, dadurch gekennzeichnet, daß an der die Kopflasche (18) aufweisenden Rechteckseite der Stirnplatte (13) die Distanzlaschen (20) jeweils zwischen der Einstecklasche (17) und der Kopflasche (18), und daß an der weiteren parallelen Rechteckseite der Stirnplatte (13) an den Enden die Hakenlaschen (23) angeordnet sind, wobei sich zwischen diesen eine Distanzlasche (24) befindet.

7. Gerät nach einem der Ansprüche 1 bis 6, dadurch gekennzeichnet, daß die Stirnplatte (13) mit der Kopflasche (18), den Einstecklaschen (17), den Hakenlaschen (23) und den Distanzlaschen (20, 24) als einstückiges Blechteil ausgestanzt ist, wonach die Laschen zu einer Plattenoberfläche hin rechtwinklig umgebogen sind.

8. Gerät nach einem der Ansprüche 1 bis 7, dadurch gekennzeichnet, daß die Aufnahmeöffnungen (21), die Schlitzausnehmungen (22) und die Winkelausnehmungen (25) gemeinsam mit einer zentralen Öffnung in Form einer Bohrung (14) für eine Schaltwelle (12) des Temperaturreglers (11) aus der Gerätewand (10) ausgestanzt ist.

9. Gerät nach Anspruch 1 mit einem einen Schalter enthaltenden Programmwerk (31), dadurch gekennzeichnet, daß die Stirnplatte (13) des Programmwerks (31) eine Ausnehmung (38) aufweist und mittels einer an der Gerätewand (30) befestigten Haltenase (37) hintergriffen ist, die durch die Ausnehmung (38) hindurchverläuft.

10. Gerät nach Anspruch 9, dadurch gekennzeichnet, daß die Haltenase (37) mit der Gerätewand (30) einstückig ausgeführt und aus der blechförmigen Gerätewand (30) ausgestanzt und aus deren Ebene herausgebogen ist.

11. Gerät nach einem der Ansprüche 9 oder 10, dadurch gekennzeichnet, daß die Stirnplatte (33) des Programmwerks (31) an der Gerätewand (30) außer der Haltenase (37) mittels eines durch eine erste Bohrung (40) der Gerätewand (30) hindurchverlaufenden Montagezapfens (39) des Programmwerks (31) befestigt ist, auf dem eine Federscheibe (41) mit Klemmzungen (42) aufgesteckt ist.

12. Gerät nach einem der Ansprüche 10 oder 11, dadurch gekennzeichnet, daß die Stirnplatte (33) des Programmwerks (31) an der Gerätewand (30) außer der Haltenase (37) mittels einer durch eine zweite Bohrung (44) der Gerätewand (30) hindurchverlaufenden und in eine Gewindebohrung der Stirnplatte (33) eingeschraubten Befestigungsschraube (43) befestigt ist.

13. Gerät nach einem der Ansprüche 10 bis 12, dadurch gekennzeichnet, daß die durch eine dritte Bohrung (34) der Gerätewand (30) hindurchverlaufende Schaltwelle (32) des Programmwerks (31) zwischen der Haltenase (37) und der ersten Bohrung (40) bzw. zweiten Bohrung (44) an angeordnet ist, die jeweils in einem Abstand von der Haltenase (37) vorgesehen ist.

**Claims**

1. An electrically operating device, such as of the group including a washing machine, a dish washer, or like household apparatus, with a control device such as a temperature control unit, or a program pack which has a switch, whereby the control device or the program pack respectively are in abutting manner and operatively in contact with and secured at a front plate (13) at a solid wall (10, 30) of the apparatus, whereby the wall (10, 30) of the apparatus is formed with recesses (21, 22, 38) into which enter lugs (17, 18, 23), which can be bent, are secured at the front plate (13 33), and which are capable of reaching or extending at the rear, in such a way that at the front plate (13), there is formed an insert lug (17) which extends approximately at right angle and which can be inserted into an receiving opening (21) of the wall (10) of the apparatus, characterized thereby that at the front plate in addition to the insert lug (17) at a distance with respect thereto is arranged a projecting head lug (18), whereby the head of the head lug can be passed through a slot recess (22) of the wall (10) of the apparatus, whereby the head of the head lug is passed through a slot recess (22) of the wall (10) of the apparatus and during shaping (twisting) of the head lug (18), about its axis which extends at right angle to front plate (13), and whereby at the front plate (13) at a distance from the head lug (18) the approximately at right angle is arranged a projecting lug or ear (23) which can be passed through an angular recess (25) of the wall (10) of the apparatus.

2. Apparatus according to claim 1, characterized thereby that the hook lug (23) with its hook-forming slot (26) which is open at one end is extending about in operative contact on both sides of the wall (10) of the apparatus in the region of the angular recess (25).

3. Apparatus according to claims 1 or 2, characterized thereby that at the front plate (13) altogether two insert lugs (17) and/or altogether two hook lugs (23) are formed.

4. Apparatus according to claims 1 to 3, characterized thereby that at the front plate (13) several approximately at right angle extending distance lugs (20, 24) are arranged at a distance from each other, at which the wall (10) of the apparatus is supported.

5. Apparatus according to claim 4, characterized thereby that the front plate (13) is a rectangular structure, whereby the head lug (18), the insert lugs (17), hook lugs (23) and the distance lugs (20, 24) are arranged at two parallel sides of the rectangular structure, and that at one side of the rectangular structure of the front plate (13) at the ends are arranged the insert lugs (17), whereby between these the head lug (18) is arranged.

6. Apparatus according to claims 4 or 5, characterized thereby that at that side of the rectangular structure of the front plate (13) which carries the head lug (18), the distance lugs (20) are respectively arranged between the insert lug (17) and the head lug (18), and that at the further parallel side of the rectangular structure of the front plate (13), at the ends are arranged the hook lugs (23), whereby between these a distance lug (24) is present.

7. Apparatus according to one of claims 1 to 6, characterized thereby that the front plate (13) with the head lug (18), the insert lugs (17), the hook lugs (23) and the distance lugs (20, 24) is punched unitarily from a sheet metal blank, whereafter the lugs are bent to extend at right angle from the upper face or surface of the plate.

8. Apparatus according to one of claims 1 to 7, characterized thereby that the receiving openings (21), the slot recesses (22) and the angular recesses (25) together with a central opening being a bore (14) for a control shaft (12) of the temperature control unit (11), are punched from the wall (10) of the apparatus.

9. Apparatus according to claim 1, with a program pack (31) which contains a switch, characterized thereby that the front plate (13) of the program pack (31) has a recess (38) and by means of an holding extension (37) arranged at the wall (30) of the apparatus and is gripped at the back, which holding extension (37) extends through the recess (38).

10. Apparatus according to claim 9, characterized thereby that the holding extension (37) is unitarily in structure with the wall (30) of the apparatus, punched from the sheet metal blank of the wall (30) of the apparatus, and bent from the plane thereof.

11. Apparatus according to one of claims 9 or 10, characterized thereby that the front plate (33) of the program pack (31), aside from the holding extension (37), is secured by means of an assembling pin (39) of the program pack (31) which extends through a first bore (40) of the wall (30) of the apparatus, onto which a spring disk (41) with clamping projections (42) is plugged in retaining condition.

12. Apparatus according to one of claims 10 or 11, characterized thereby that the front plate (33) of the program pack (31) is secured at the wall (30) of the apparatus, aside from the holding extension (37), by means of an attachment screw (43) which extends through a second bore (44) of the wall (30) of the apparatus, and which is screwed into a threaded bore of the front plate (33).

13. Apparatus according to one of claims 10 to 12, characterized thereby that the control pack's (31) control shaft (32) which extends through a third bore (34) of the wall (30) of the apparatus, is also arranged between the holding extension (37) and the first bore (40), or the second bore (44), respectively, which are respectively formed at a distance from the holding formation (37).

**Revendications**

1. Appareil travaillant électriquement, p.ex.appareil ménager sous forme de machine à laver, lave-vaisselle ou semblable, muni d'un équipement de réglage comme un thermorégulateur ou une horloge programmatrice comportant un commutateur, l'équipement de réglage ou l'horloge programmatrice étant fixés chacun de manière adjacente et au moyen d'une plaque frontale (13) sur une paroi fixe de l'appareil (10,30), la paroi de l'appareil (10,30) étant munie de creux (21,22,38) dans lesquels s'insèrent des jumelles (17,18,23) déformables, fixées en s'accrochant sur la plaque frontale (13,33), de sorte qu'à la plaque frontale (13) soit installée la jumelle insérable (17) dépassant en angle approximativement droit qui est insérée dans une ouverture de réception (21) de la paroi de l'appareil (10), caractérisé en ce qu'à la plaque frontale est disposée additionnellement et à distance de la jumelle insérable (17) la jumelle à tête (18), la tête de la jumelle à tête traversant un creux en fente (22) de la paroi de l'appareil (10) et étant tournée, à la déformation de la jumelle à tête (18), autour de son axe s'étendant orthogonalement par rapport à la plaque frontale (13) la jumelle à crochet (23) étant disposée à la plaque frontale (13) en dépassant en angle approximativement droit et à distance de la jumelle à tête (18), ladite jumelle à crochet traversant un creux angulaire (25) de la paroi de l'appareil (10).

2. Appareil selon la revendication 1, caractérisé en ce que la jumelle à crochet (23) entoure des deux côtés, par une fente (26) ouverte d'un bout et formant le crochet, la paroi de l'appareil (10) dans la zone du creux angulaire (25).

3. Appareil selon les revendications 1 ou 2, caractérisé en ce que sur la plaque frontale (13) se trouvent au total deux jumelles insérables (17) et/ou au total deux jumelles à crochet (23).

4. Appareil selon l'une des revendications 1 à 3, caractérisé en ce que sur la plaque frontale (13) sont installées plusieurs jumelles à distance (20,24) dépassant en angle approximativement droit et écartées mutuellement sur lesquelles s'appuie la paroi de l'appareil (10).

5. Appareil selon la revendication 4, caractérisé en ce que la plaque frontale (13) se présente en réctangle, la jumelle à tête (18), les jumelles insérables (17), les jumelles à crochet (23) et les jumelles à distance (20,24) étant installées sur deux côtés parallèles du réctangle et en ce que sur un côté du réctangle de la plaque frontale (13) sont disposées aux bouts les jumelles insérables (17), la jumelle à tête (18) se trouvant entre celles-ci.

6. Appareil selon la revendication 4 ou 5, caractérisé en ce sur le coté du réctangle de la plaque frontale (13) présentant la jumelle à tête (18) se trouvent les jumelles à distance (20) à savoir chacun entre les jumelles insérables (17) et la jumelle à tête (18) et en ce qu'aux bouts de l'autre côté parallèle du réctangle de la plaque frontale (13) sont disposées les jumelles à crochet (23), une jumelle à distance (24) se trouvant entre celles-ci.

7. Appareil selon l'une des revendications 1 à 6, caractérisé en ce que la plaque frontale (13) avec la jumelle à tête (18), les jumelles insérables (17), les jumelles à crochet (23) et les jumelles à distance (20,24) est découpée en une seule pièce en tôle, les jumelles étant par la suite repliées orthogonalement vers une surface de la plaque.

8. Appareil selon l'une des revendications 1 à 7, caractérisé en ce que les ouvertures de réception (21), les creux en fente (22) et les creux angulaires (25) sont découpés en commun de la paroi de l'appareil (10) et avec une ouverture centrale sous forme d'une forure (14) pour un arbre de commande (12) du thermorégulateur (11).

9. Appareil selon la revendication 1 muni d'une horloge programmatrice (31) comprenant un commutateur, caractérisé en ce que la plaque frontale (13) de l'horloge programmatrice (31) présente un creux (38) et est qu'elle s'accroche au moyen d'une jumelle de retention (37) fixé sur la paroi de l'appareil (30), ladite jumelle de retention traversant le creux (38).

10. Appareil selon la revendication 9, caractérisé en ce que la jumelle de retention (37) est fabriquée en une seule pièce avec la paroi de l'appareil (30), qu'elle est décoúpée de la paroi de l'appareil (30) en tôle et qu' elle est pliée en sortant du plan de celle-ci.

11. Appareil selon l'une des revendications 9 ou 10, caractérisé en ce que la plaque frontale (33) de l'horloge programmatrice (31) est fixée à la paroi de l'appareil (30) en dehors de la jumelle de retention (37) au moyen d'un boulon de montage (39) de l'horloge programmatrice (31) traversant une première forure (40) de la paroi de l'appareil (30), ledit boulon de montage étant muni d'une rondelle élastique (41) equipée de languettes de serrage (42).

12. Appareil selon l'une des revendications 10 ou 11, caractérisé en ce que la plaque frontale (33) de l'horloge programmatrice (31) est fixée à la paroi de l'appareil (30) en dehors de la jumelle de retention (37) au moyen d'une vis de fixation (43) vissée dans un filetage de la plaque frontale (33) traversant une deuxième forure (44) de la paroi de l'appareil (30).

13. Appareil selon l'une des revendications 10 à 12, caractérisé en ce que l'arbre de commande (32) de l'horloge programmatrice (32) traversant une troisième forure (34) de la paroi de l'appareil (30) est installé entre la jumelle de retention (37) et la première (40) respectivement la deuxième (44) forure, dont chacune est prévue à une distance de la jumelle de rétention (37).

Fig.1

Fig.2

Fig.3

Fig.4

Fig.5

Fig.6